# EUROPEAN PATENT APPLICATION

(11) **EP 2 293 303 A1**
(43) Date of publication of application: **09.03.2011**
(21) Application number: 10158360.7
(22) Date of filing: 30.03.2010
(51) Int. Cl.: G11B 27/34, H04N 5/76

(54) **Recorder and recording method**

(30) Priority: 31.08.2009 JP 2009200940
(71) Applicant: Kabushiki Kaisha Toshiba, Tokyo 105-8001 (JP)
(72) Inventor: Nakano, Hiroyuki, Tokyo 105-8001 (JP)
(74) Representative: HOFFMANN EITLE

(57) **Abstract**

According to one embodiment, a recorder includes a first recording module (106), a second recording module (107), a changer (108), and a display controller (115) . The first recording module (106) records first content data on a recording medium (110) in first recording mode in which data is deleted after a lapse of a predetermined time. The second recording module (107) records second content data on the recording medium (110) in second recording mode. The changer (108) changes the recording mode of the first content data to the second recording mode. The display controller (115) displays on a display module (120) a list of content data recorded in the first recording mode or a list of content data recorded in the second recording mode, in which the first content data is displayed differently from other content data.

## Description

### BACKGROUND

### 1. Field

One embodiment of the invention relates to a recorder and a recording method.

### 2. Description of the Related Art

Recorders that use a large-capacity storage medium such as a hard disk has employed a mode (loop recording mode) of recording content data such as a program by repetitive overwrite recording in an area other than the general storage area.

For example, Japanese Patent Application Publication (KOKAI) No. 2008-11402 discloses a conventional recorder having the function of transferring content data recorded in loop recording mode to the general storage area to prevent the content data from being overwritten.

With the conventional recorder, it is difficult to recognize content data the recording mode of which has been changed.

It is therefore an object of the invention to provide a recorder and a recording method capable of enabling content data the recording mode of which has been changed to be easily recognized.

### SUMMARY OF THE INVENTION

To overcome the problems and achieve the object mentioned above, in general, according to an aspect of the invention, a recorder comprises a first recording module, a second recording module, a changer, and a display controller. The first recording module is configured to record first content data on a recording medium in first recording mode in which data is deleted after a lapse of a predetermined time. The second recording module is configured to record second content data on the recording medium in second recording mode. The changer is configured to change the recording mode of the first content data to the second recording mode. The display controller is configured to display on a display module a list of content data recorded in the first recording mode or a list of content data recorded in the second recording mode, in which the first content data is displayed differently from other content data.

According to another aspect of the invention there is provided a recording method comprising: a first recording module recording first content data on a recording medium in first recording mode in which data is deleted after a lapse of a predetermined time; a second recording module recording second content data on the recording medium in second recording mode; a changer changing the recording mode of the first content data to the second recording mode; and a display controller displaying on a display module a list of content data recorded in the first recording mode or a list of content data recorded in the second recording mode, in which the first content data is displayed differently from other content data.

As described above, according to an aspect of the invention, it is possible to easily recognize content data the recording mode of which has been changed.

### BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary block diagram of a television (TV) receiver according to an embodiment of the invention;
FIG. 2 is an exemplary block diagram of a tuner in the embodiment;
FIG. 3 is an exemplary flowchart of the process of displaying a list of programs recorded in loop recording mode in the embodiment;
FIG. 4 is an exemplary schematic diagram of a list of programs stored in the loop storage area in the embodiment;
FIG. 5 is an exemplary schematic diagram of the list of the programs stored in the loop storage area after a program is transferred to the personal video recorder (PVR) storage area in the embodiment;
FIG. 6 is an exemplary flowchart of the process of displaying a list of programs recorded in PVR recording mode in the embodiment;
FIG. 7 is an exemplary schematic diagram of a list of programs stored in the PVR storage area when a program is transferred from the loop storage area to the PVR storage area in the embodiment;
FIG. 8 is an exemplary schematic diagram of the list of the programs stored in the PVR storage area when no program is transferred from the loop storage area to the PVR storage area in the embodiment;
FIG. 9 is an exemplary schematic diagram of the list of the programs stored in the loop storage area after a program is copied to the PVR storage area in the embodiment; and
FIG. 10 is an exemplary schematic diagram of a list of programs stored in the loop storage area after a program is transferred to the PVR storage area according to a modification of the embodiment.

### DETAILED DESCRIPTION

Various embodiments according to the invention will be described hereinafter with reference to the accompanying drawings.

In the following, the recorder will be described as a television (TV) receiver with recording function. However, this is by way of example only and the recorder may also be a hard disk drive (HDD) recorder, an HDD + digital versatile disc (DVD) recorder, and the like.

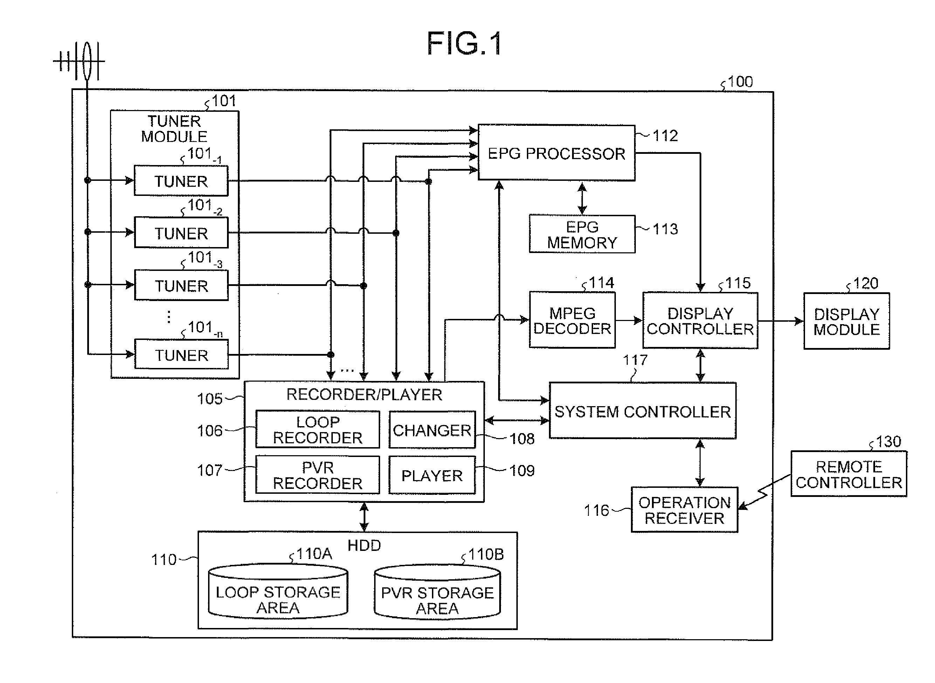

A description will be given of a TV receiver 100 according to an embodiment of the invention. FIG. 1 is a block diagram of the TV receiver 100 according to the embodiment. As illustrated in FIG. 1, the TV receiver 100 comprises a tuner module 101, a recorder/player 105, an HDD 110, an electronic program guide (EPG) processor 112, an EPG memory 113, a moving picture exerts group (MPEG) decoder 114, a display controller 115, an operation receiver 116, and a system controller 117.

Content data such as a program, control data, and the like is multiplexed into a transport stream, and the tuner module 101 receives the transport stream from a broadcast station. The tuner module 101 of the embodiment comprises tuners 101₋₁ to 101₋ₙ (n: natural number) that receive transport streams of channels Ch1 to ChN, respectively. The tuners 101₋₁ to 101₋ₙ outputs the transport streams of the channels Ch1 to ChN to the recorder/player 105 and the EPG processor 112.

The tuners 101₋₁ to 101₋ₙ will be described below. The tuners 101₋₁ to 101₋ₙ are of like configuration and thus but one of them, for example, the tuner 101₋₁ will be described in detail.

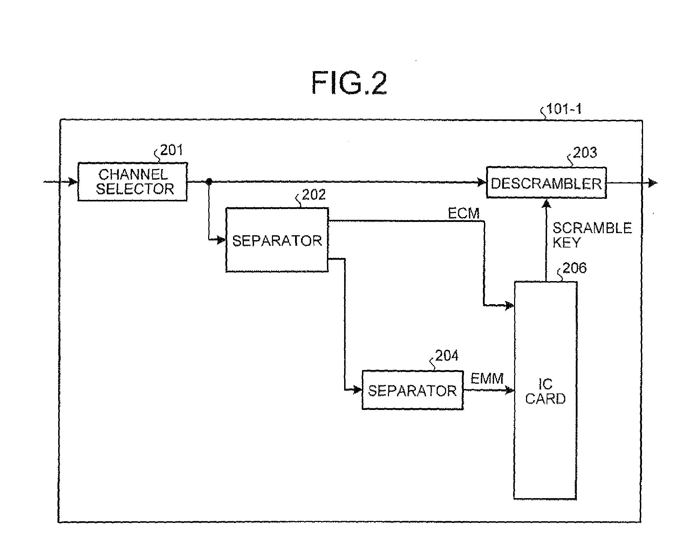

FIG. 2 illustrates an example of the configuration of the tuner 101₋₁. As illustrated in FIG. 2, the tuner 101₋₁ comprises a channel selector 201, a separator 202, a descrambler 203, a separator 204, and an integrated circuit (IC) card 206.

The channel selector 201 selects a channel for antenna input, and outputs a transport stream of the selected channel to the separator 202 and the descrambler 203.

The separator 202 separates control data ECM multiplexed into the transport stream received from the channel selector 201, and outputs the separated controls data ECM to the IC card 206. Besides, the separator 202 outputs the transport stream received from the channel selector 201 to the separator 204. The separator 204 separates control data EMM multiplexed into the transport stream received from the separator 202, and outputs the separated control data EMM to the IC card 206.

The IC card 206 decodes a scramble key using the control data ECM received from the separator 202 and the control data EMM received from the separator 204. The descrambler 203 descrambles content data multiplexed into the transport stream using the scramble key decoded by the IC card 206 and then outputs it.

While the tuners 101₋₁ to 101₋ₙ of the embodiment are described above as each having the IC card 206, a plurality of tuners may share an IC card.

Referring back to FIG. 1, the recorder/player 105 extracts content data from transport streams of the channels Ch1 to ChN to record or reproduce the content data. The recorder/player 105 comprises a loop recorder 106, a PVR recorder 107, a changer 108, and a player 109.

The loop recorder 106 records or stores content data in the HDD 110 in loop recording mode where data is deleted when a predetermined time has elapsed. More specifically, the loop recorder 106 stores content data in a loop storage area 110A from the top or start of the loop storage area 110A. When content data is stored up to the end of the loop storage area 110A, the loop recorder 106 stores content data again from the top of the loop storage area 110A. The loop recorder 106 deletes the content data stored in the loop storage area 110A when the predetermined time has elapsed. The loop recorder 106 may delete the content data stored in the loop storage area 110A when the volume of the content data exceeds a predetermined value.

The loop recorder 106 receives an instruction specifying a time period during which loop recording is performed from the system controller 117, which will be described later. During the specified time period, the loop recorder 106 stores a plurality of pieces of content data received by the tuner module 101 in the loop storage area 110A in loop recording mode. Further, the loop recorder 106 receives an instruction specifying a plurality of channels content data of which is to be loop-recorded from the system controller 117. The loop recorder 106 stores a plurality of pieces of content data of the channels in the loop storage area 110A in loop recording mode.

The PVR recorder 107 records or stores content data in the HDD 110 in PVR recording mode, i.e., general recording mode. More specifically, the PVR recorder 107 stores content data in a PVR storage area 110B of the HDD 110. The PVR recorder 107 maintains the content data stored in the PVR storage area 110B without deleting it unless instructed by the system controller 117 to delete it.

The loop recorder 106 and the PVR recorder 107 add information to the content data before storing it in the HDD 110. Examples of the information include channel information indicating a channel of a program recorded as the content data, the program name, the date and time of recording the content data, the reproduction or play history of the content data, the remaining number of times of transferring or copying the content data, and the like. While, in the embodiment, the loop storage area 110A and the PVR storage area 110B are secured in the HDD 110, they may be secured in different HDDs, respectively.

The changer 108 changes the recording mode of the content data recorded in loop recording mode to the PVR recording mode. More specifically, the changer 108 transfers or copies the content data stored in the loop storage area 110A to the PVR storage area 110B. At this time, the changer 108 updates the remaining number of times of transferring or copying the content data. Thus, the content data transferred or copied from the loop storage area 110A to the PVR storage area 110B can be recognized.

The player 109 outputs content data extracted from transport streams of the channels Ch1 to ChN or content data stored in the HDD 110 to the MPEG decoder 114 to reproduce it.

The EPG processor 112 extracts program information (SI information), i.e., EPG information, indicating programs of each channel broadcasted in each time period from transport streams of the channels Ch1 to ChN. The EPG processor 112 stores the EPG information in the EPG memory 113. Further, to maintain the EPG information stored in the EPG memory 113 to be the latest version, the EPG processor 112 extracts EPG information from transport streams of the channels Ch1 to ChN and updates the EPG information stored in the EPG memory 113 with the extracted EPG information.

While the EPG information of each channels is described above as being extracted from each of transport streams of the channels Ch1 to ChN as in the case of Japanese digital terrestrial broadcasting, this is by way of example and not of limitation. For example, in the case of broadcasting satellite (BS) digital broadcasting, pieces of EPG information of all BS channels are multiplexed. In any case, the EPG processor 112 extracts pieces of EPG information of channels that the TV receiver 100 can receive and stores them in the EPG memory 113.

Besides, in response to an instruction from the system controller 117, which will be described later, to display a program guide, the EPG processor 112 retrieves EPG information stored in the EPG memory 113, and outputs program guide data to the display controller 115. The program guide data represents a program guide in which retrieved pieces of the EPG information are arranged in time series with respect to each channel.

The MPEG decoder 114 performs MPEG-2 decoding on the content data received from the recorder/player 105, and outputs it to the display controller 115.

The display controller 115 outputs the program guide data output from the EPG processor 112 and the content data output from the MPEG decoder 114 to a display module 120 as a TV signal.

In the embodiment, a list of content data recorded in loop recording mode is created by the EPG processor 112 in a form of a program guide and displayed on the display module 120 by the display controller 115. Meanwhile, a list of content data recorded in PVR recording mode is created by the recorder/player 105 and displayed on the display module 120 by the display controller 115.

At the time of displaying the list of content data recorded in loop recording mode or PVR recording mode on the display module 120, the display controller 115 displays content data, the recording mode of which has been changed from the loop recording mode to the PVR recording mode by the changer 108, in a form different from that of other content data.

More specifically, at the time of displaying the list of content data recorded in loop recording mode or PVR recording mode on the display module 120, the display controller 115 displays content data that has been transferred or copied from the loop storage area 110A to the PVR storage area 110B with a symbol, a mark, or the like.

It can be determined whether content data is the one that has been transferred or copied from the loop storage area 110A to the PVR storage area 110B by the recorder/player 105 referring to information attached to the content data as to the remaining number of times of transfer or copy. For example, if content data can be dubbed ten times, the content data can be transferred once and copied nine times. Therefore, if the remaining number of times of transfer of content data stored in the PVR storage area 110B is zero or the remaining number of times of copy of content data stored in the loop storage area 110A is less than nine, it can be determined that the content data is the one that has been transferred or copied from the loop storage area 110A to the PVR storage area 110B. The system controller 117, which will be described later, receives the determination result from the recorder/player 105, and instructs the display controller 115 whether to display content data with a mark or the like.

The display module 120 displays a program based on the TV signal received from the display controller 115. The display module 120 also displays a list of content data recorded in loop recording mode and a list of content data recorded in PVR recording mode. The display module 120 may comprise, for example, a liquid crystal display (LCD), a plasma display, an organic electroluminescent (EL) display, or the like.

The operation receiver 116 receives an instruction from a remote controller 130 and notifies the system controller 117 of the instruction. Examples of the instruction include an instruction specifying a time period, channels, and the like for loop recording, an instruction to perform PVR recording, an instruction to delete content data recorded in PVR recording mode, an instruction to transfer or copy content data from the loop storage area 110A to the PVR storage area 110B, an instruction to reproduce content data stored in the HDD 110, and an instruction to display a list of programs stored in the loop storage area 110A or the PVR storage area 110B.

The system controller 117 controls the overall operation of the TV receiver 100. For example, upon receipt of a notification from the operation receiver 116, the system controller 117 controls or instructs each module of the TV receiver 100 according to the notification from the operation receiver 116.

A description will then be given of the operation of the TV receiver 100 according to the embodiment. In the following, an example will be described in which the loop recorder 106 records programs of six broadcast stations (channels) A to F in loop recording mode and stores the programs in the loop storage area 110A. It is assumed in the example that a program can be stored in the loop storage area 110A for three days and is deleted after a lapse of three days.

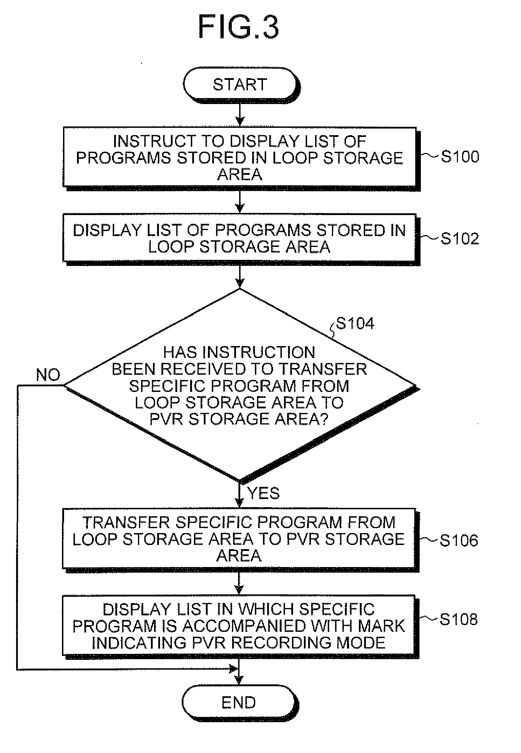

FIG. 3 is a flowchart of the process of displaying a list of programs recorded in loop recording mode.

First, the system controller 117 receives an instruction to display a list of programs stored in the loop storage area 110A from the remote controller 130 through the operation receiver 116 (S100).

Upon receipt of an instruction from the system controller 117, the EPG processor 112 retrieves EPG information on the programs stored in the loop storage area 110A from the EPG memory 113. The display controller 115 displays, as a list of the programs, a program guide in which pieces of the EPG information retrieved by the EPG processor 112 are arranged in time series with respect to each channel on the display module 120 (S102).

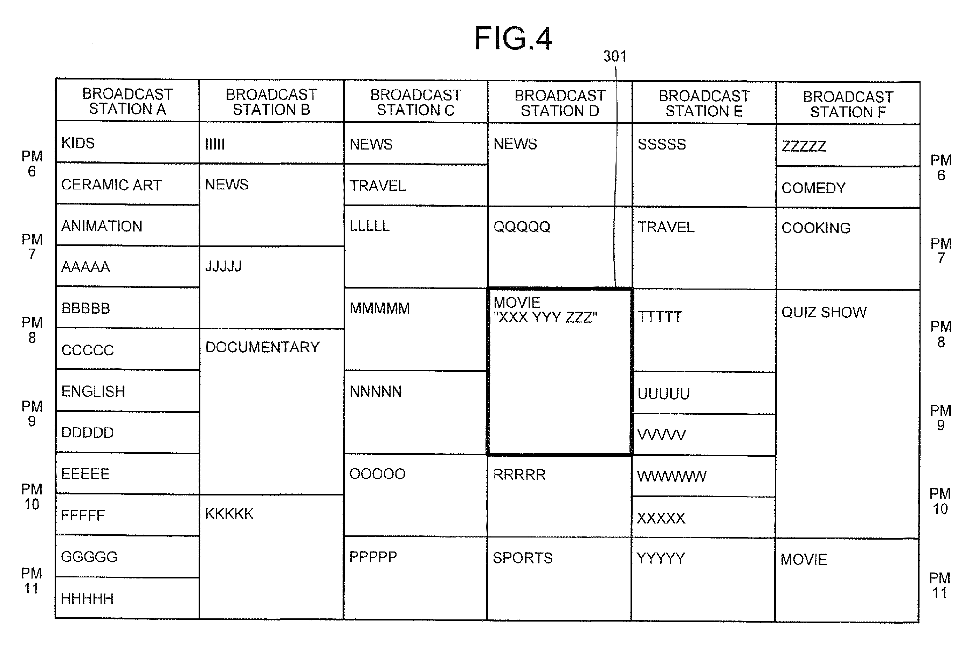

FIG. 4 illustrates an example of a list of the programs stored in the loop storage area 110A. In the example of FIG. 4, the program list indicates programs broadcasted from 5:30 pm to 11:30 pm with respect to each of the broadcast stations A to F in a form of a program guide such as an EPG. That is, programs broadcasted by the broadcast stations A to F from 5: 30 pm to 11:30 pm are stored in the loop storage area 110A.

The system controller 117 then checks whether an instruction has been received from the remote controller 130 through the operation receiver 116 to transfer a specific program in the program list displayed as a program guide from the loop storage area 110A to the PVR storage area 110B (S104).

When an instruction has been received to transfer a specific program from the loop storage area 110A to the PVR storage area 110B (Yes at S104), in response to an instruction from the system controller 117, the changer 108 transfers the specific program from the loop storage area 110A to the PVR storage area 110B (S106). For example, if an instruction has been received to transfer a program 301 in FIG. 4 from the loop storage area 110A to the PVR storage area 110B, the changer 108 transfers the program 301 from the loop storage area 110A to the PVR storage area 110B.

Thereafter, in response to an instruction from the system controller 117, the display controller 115 displays the program list in which the specific program is accompanied with a mark indicating the PVR recording mode (S108).

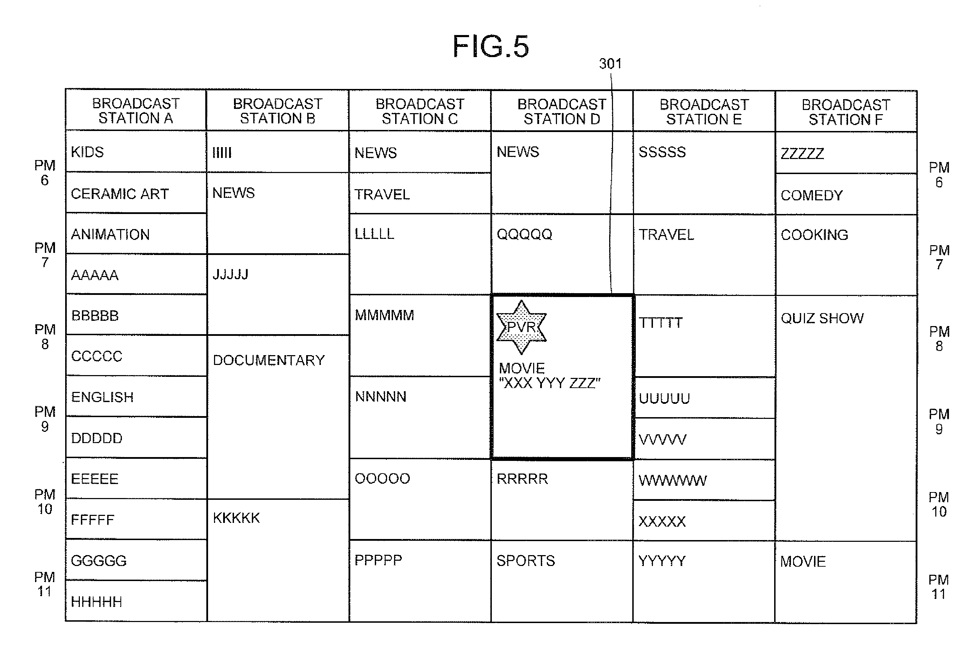

FIG. 5 illustrates an example of a list of programs stored in the loop storage area 110A after the program 301 is transferred to the PVR storage area 110B. In the example of FIG. 3, since the program 301 has been transferred from the loop storage area 110A to the PVR storage area 110B, the program 301 is displayed with a mark indicating the PVR recording mode.

When an instruction has not been received to transfer a specific program from the loop storage area 110A to the PVR storage area 110B (No at S104), the process at S106 and S108 is not performed.

As described above, according to the embodiment, in a list of programs stored in the loop storage area 110A, a program transferred from the loop storage area 110A to the PVR storage area 110B is displayed with a mark indicating the PVR recording mode. Thus, the user can check the program transferred from the loop storage area 110A to the PVR storage area 110B and information on the program at the same time.

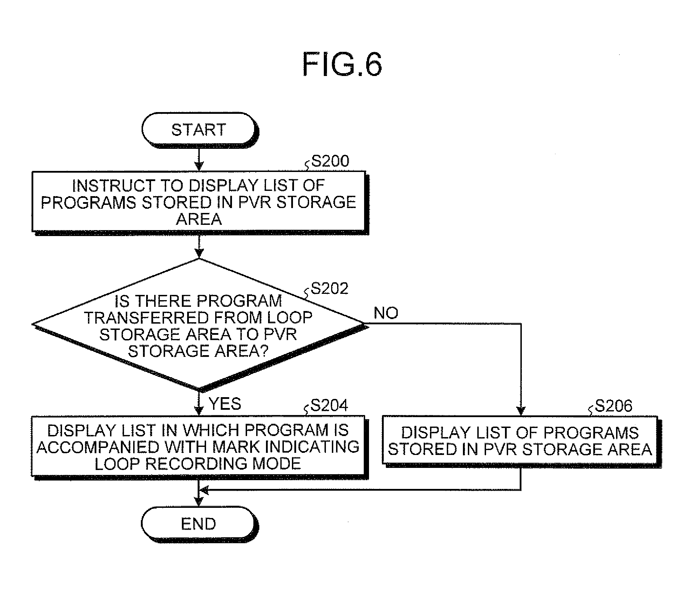

FIG. 6 is a flowchart of the process of displaying a list of programs recorded in PVR recording mode.

First, the system controller 117 receives an instruction to display a list of programs stored in the PVR storage area 1102 from the remote controller 130 through the operation receiver 116 (S200).

Upon receipt of an instruction from the system controller 117, the recorder/player 105 checks whether there is a specific program transferred from the loop storage area 110A to the PVR storage area 110B in the programs stored in the PVR storage area 110B (S202).

When there is a specific program transferred from the loop storage area 110A to the PVR storage area 110B (Yes at S202), the display controller 115 displays a list of the programs stored in the PVR storage area 110B created by the recorder/player 105 in which the specific program is displayed with a mark indicating the loop recording mode (S204).

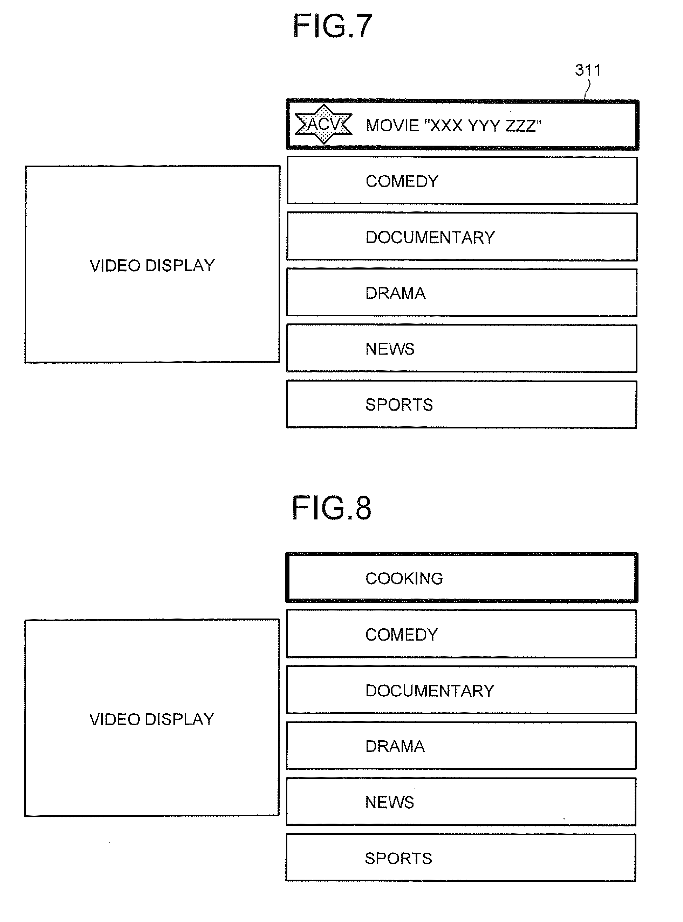

FIG. 7 illustrates an example of a list of programs stored in the PVR storage area l10B when a program has been transferred from the loop storage area 110A to the PVR storage area 110B. In the example of FIG. 7, a list of programs stored in the PVR storage area 110B is displayed with video of a program 311 selected by a cursor. Since the program 311 has been transferred from the loop storage area 110A to the PVR storage area 110B, the program 311 is displayed with a mark indicating the loop recording mode. In addition, the program 311 is displayed at the top of the list of the programs stored in the PVR storage area 110B.

When there is no specific program transferred from the loop storage area 110A to the PVR storage area 110B (No at S202), the display controller 115 directly displays the list of the programs stored in the PVR storage area 110B created by the recorder/player 105 (S206).

FIG. 8 illustrates an example of a list of programs stored in the PVR storage area 110B when no program has been transferred from the loop storage area 110A to the PVR storage area 110B. In the example of FIG. 8, since no program has been transferred from the loop storage area 110A to the PVR storage area 110B, all programs are displayed without a mark indicating the loop recording mode.

As described above, according to the embodiment, in a list of programs stored in the PVR storage area 110B, a program transferred from the loop storage area 110A to the PVR storage area 110B is displayed with a mark indicating the loop recording mode. Thus, the user can check the program transferred from the loop storage area 110A to the PVR storage area 110B and information on the program at the same time. Moreover, a program transferred from the loop storage area 110A to the PVR storage area 110B is displayed at the top of the program list, which helps to attract user's attention.

A program can be copied in the same manner as the transfer of a program from the loop storage area 110A to the PVR storage area 110B described above by way of example.

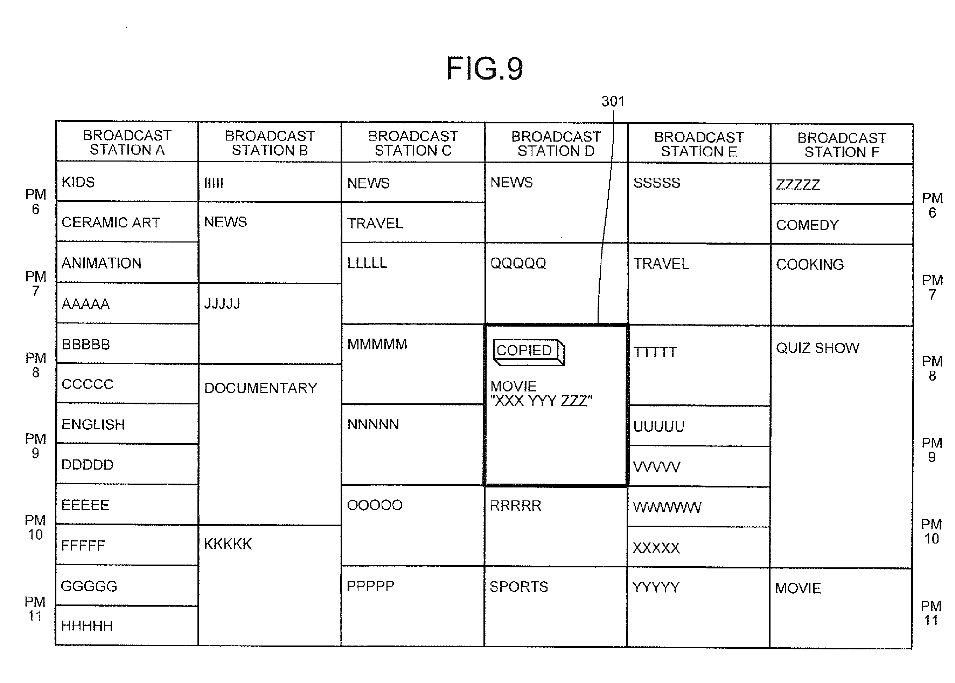

FIG. 9 illustrates an example of a list of programs stored in the loop storage area 110A after the program 301 has been copied to the PVR storage area 110B. In the example of FIG. 9, since the program 301 has been copied from the loop storage area 110A to the PVR storage area 110B, the program 301 is displayed with a mark indicating that the program has been copied.

In this manner, a program copied from the loop storage area 110A to the PVR storage area 110B is displayed with a mark indicating that the program has been copied in a list of programs stored in the loop storage area 110A. Thus, the user can check the program copied to the PVR storage area 110B and information on the program at the same time. Incidentally, in terms of content protection, depending on whether a program has been transferred or copied, or only management information has been changed without the transfer of a program, the icon may be displayed in different forms, or the background of the program may be displayed in different colors.

While, in the embodiment, an example is described in which, when content data of a program is transferred from the loop storage area 110A to the PVR storage area 110B, the program is displayed with a mark indicating the PVR recording mode in a list of programs stored in the loop storage area 110A; however, the program may not be displayed.

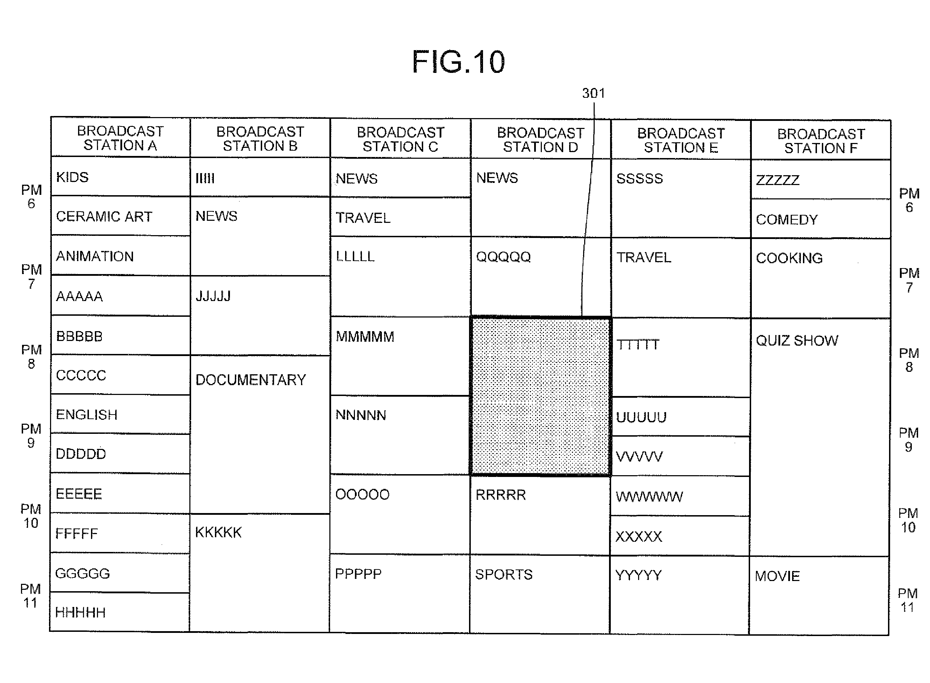

FIG. 10 illustrates an example of a list of programs stored in the loop storage area 110A after the program 301 is transferred to the PVR storage area 110B. In the example of FIG. 10, the program 301 is not displayed after being transferred from the loop storage area 110A to the PVR storage area 110B.

Further, while, in the embodiment, an example is described in which a program transferred from the loop storage area 110A to the PVR storage area 110B is displayed with a mark in a list of programs stored in the loop storage area 110A as well as a list of programs stored in the PVR storage area 110B, the program may be accompanied with a mark in either one of the lists.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A recorder comprising:
a first recording module (106) configured to record first content data on a recording medium (110) in first recording mode in which data is deleted after a lapse of a predetermined time;
a second recording module (107) configured to record second content data on the recording medium (110) in second recording mode;
a changer (108) configured to change recording mode of the first content data to the second recording mode; and
a display controller (115) configured to display on a display module (120) a list of content data recorded in the first recording mode or a list of content data recorded in the second recording mode, in which the first content data is displayed differently from other content data.

2. The recorder of Claim 1, wherein
the first recording module (106) is configured to store the first content data in a first storage area of the recording medium (110),
the second recording module (107) is configured to store the second content data in a second storage area of the recording medium (110), and
the changer (108) is configured to transfer the first content data from the first storage area to the second storage area to change the recording mode of the first content data to the second recording mode.

3. The recorder of Claim 1, wherein
the first recording module (106) is configured to store the first content data in a first storage area of the recording medium (110),
the second recording module (107) is configured to store the second content data in a second storage area of the recording medium (110), and
the changer (108) is configured to copy the first content data from the first storage area to the second storage area to change the recording mode of the first content data to the second recording mode.

4. The recorder of any one of Claims 1 to 3, wherein the display controller (115) is configured to display on the display module (120) the list of the content data recorded in the first recording mode in which the first content data is displayed with a symbol.

5. The recorder of any one of Claims 1 to 3, wherein the display controller (115) is configured to display on the display module (120) the list of the content data recorded in the first recording mode not indicating the first content data.

6. The recorder of any one of Claims 1 to 5, wherein the display controller (115) is configured to display on the display module (120) the list of the content data recorded in the second recording mode in which the first content data is displayed with a symbol.

7. The recorder of any one of Claims 2 to 6, wherein the first recording module (106) is configured to receive an instruction specifying a time period during which recording is performed in the first recording mode, sequentially store a plurality of pieces of content data received by a tuner (101) during the time period in the first storage area from a top of the first storage area, delete the content data after a lapse of the predetermined time, and, when content data is stored up to an end of the first storage area, store content data again from the top of the first storage area.

8. The recorder of Claim 7, wherein the first recording module (106) is configured to receive an instruction specifying a plurality of channels content data of which is recorded in the first recording mode, sequentially store a plurality of pieces of content data of the channels received by the tuner (101) during the time period in the first storage area from the top of the first storage area, delete the content data after a lapse of the predetermined time, and, when content data is stored up to the end of the first storage area, store content data again from the top of the first storage area.

9. A recording method comprising:
a first recording module recording first content data on a recording medium in first recording mode in which data is deleted after a lapse of a predetermined time;
a second recording module recording second content data on the recording medium in second recording mode;
a changer changing recording mode of the first content data to the second recording mode; and
a display controller displaying on a display module a list of content data recorded in the first recording mode or a list of content data recorded in the second recording mode, in which the first content data is displayed differently from other content data.
